# EUROPEAN PATENT APPLICATION

(11) **EP 2 535 858 A1**
(43) Date of publication of application: **19.12.2012**
(21) Application number: 12172066.8
(22) Date of filing: 14.06.2012
(51) Int. Cl.: G06Q 30/02

(54) **Method and system for providing location targeted advertisements**

(30) Priority: 16.06.2011 US 201113161901
(71) Applicant: Navteq North America, LLC, Chicago, Illinois 60606 (US)
(72) Inventor: Shutter, Jon, Chicago, IL 60611 (US)
(74) Representative: Potter Clarkson LLP

(57) **Abstract**

A method of providing advertisements is disclosed. A position of a mobile device is determined, and the mode of transport of the mobile device is determined. If the mode of transport is public transit, a first advertisement message for a first point of interest is provided to the mobile device. The first point of interest is located proximate an upcoming transit stop of a transit line that the mobile device is traveling on. If the mode of transport is vehicle, bike or pedestrian, a second advertisement message for a second point of interest proximate the position of the mobile device is provided to the mobile device.

## Description

### BACKGROUND OF THE INVENTION

The present invention relates to a method and system for providing advertisements, and more particularly to a method and system for providing location targeted advertisements to mobile devices.

Persons who travel through a geographic region can use different types of mobile or portable computing platforms to obtain various geographically-related features and services. Mobile or portable computing platforms that provide geographically-related features and services include dedicated computing devices and general purpose computing devices. Dedicated computing devices include in-vehicle navigation systems and personal (i.e., portable or hand-held) navigation systems. General purpose computing devices include devices, such as mobile telephones, portable personal computers (e.g., notebook computers, tablets) and personal digital assistants (e.g., PDAs).

Some of the various geographically-related features and services provided by the different types of mobile or portable computing platforms include route calculation and guidance. For example, some mobile or portable computing platforms are able to provide users with an optimum route to travel by roads between locations in a geographic region. Using input from an end user, and optionally from equipment that can determine the end user's physical location (such as a GPS system), a navigation application program used by a mobile or portable computing platform system examines various paths between two locations to determine an optimum route to travel from a starting location to a destination location in the geographic region. The user of the mobile or portable computing platform is then provided with information about the optimum route in the form of instructions that identify the maneuvers required to be taken by the end user to travel from the starting location to the destination location.

Another geographically-related feature provided by some mobile or portable computing platforms is business or person finding services (e.g., electronic yellow or white pages). These services can identify addresses of individuals or businesses. These services can also identify for a user which businesses of a certain type (e.g., Chinese restaurants) are located within a given range (e.g., 3 miles) of a given location.

Although present mobile or portable computing platforms that provide geographically-related features and services are able to provide many useful advantages, there continues to be room for improvement. One area in which there is room for improvement relates to providing information to end users based upon their location. Some types of information, such as advertising, can be more effective or useful if it is restricted to only certain specific locations. For example, a gas station located in Chicago would not advertise to users located in Miami.

Accordingly, it is an objective to deliver advertising to end users who are traveling in a geographic region. One area in which there is room for improvement relates to creating and providing advertisements to the end user of the mobile or portable computing platforms. It would be beneficial to both the advertiser and the users to provide advertisements that are tailored to the end users and encourage action by the end users.

### SUMMARY OF THE INVENTION

To address these and other objectives, the present invention comprises a computer implemented method of providing advertisements to mobile devices located in a geographic region. The method obtains a position of a mobile device and determines a mode of transport of the mobile device. If the mode of transport is public transit, the method provides a first advertisement message for a first point of interest to the first mobile device, wherein the first point of interest is located proximate an upcoming transit stop of a transit line that the mobile device is traveling on. If the mode of transport is vehicle, bike or pedestrian, the method provides a second advertisement message for a second point of interest proximate the position of the mobile device.

According to another aspect, the present invention comprises a system for providing an advertisement. The system comprises a processor, an advertisement database stored on a computer readable medium associated with the processor, and an advertising program executed on the processor. The advertising program determines whether a mobile device is traveling on a public transit line, and if so, provides a first advertisement message for a first point of interest to the mobile device. The first point of interest is located proximate an upcoming transit stop of the transit line that the mobile device is traveling on.

According to an aspect of the invention, there is provided a computer implemented method of providing advertisements, the method comprising: obtaining a position of a mobile device; determining a mode of transport of the mobile device; if the mode of transport is public transit, providing a first advertisement message for a first point of interest to the mobile device, wherein the first point of interest is located proximate an upcoming transit stop of a transit line that the mobile device is traveling on; and if the mode of transport is vehicle, bike or pedestrian, providing a second advertisement message for a second point of interest proximate the position of the mobile device.

The mode of transport may be determined by map matching the position of the mobile device to data representing a location of a transit line, a road segment, a bike path or a pedestrian path.

The mode of transport may be determined by evaluating the speed of travel of the mobile device.

The second advertisement message may have an associated advertising area defining a portion of a geographic region, wherein the position of the mobile device is located within the associated advertising area.

The size of the advertising area may depend on the mode of transport of the mobile device.

The first advertisement message may have an associated advertising area defining a portion of a geographic region, wherein the location of the upcoming transit stop is located within the associated advertising area.

The method may further comprise: obtaining a past position and a current position of the mobile device; and determining a direction of travel of the mobile device.

According to an aspect of the invention, there is provided a system for providing an advertisement comprising: a processor, an advertisement database stored on a computer readable medium associated with the processor, and an advertising program executed on the processor, wherein the advertising program determines whether a mobile device is traveling on a public transit line, and if so, provides a first advertisement message for a first point of interest to the mobile device, wherein the first point of interest is located proximate an upcoming transit stop of the public transit line that the mobile device is traveling on.

The advertising program may determine whether a mobile device is traveling on the public transit line by map matching the position of the mobile device to data representing a location of the public transit line.

The advertising program may determine whether a mobile device is traveling on the public transit line by evaluating the speed of travel of the mobile device.

The advertising program may determine whether a mobile device is traveling on the public transit line by evaluating schedule data of the public transit line.

In some embodiments, if the mobile device is not traveling on the public transit line, the advertising program provides a second advertisement message for a second point of interest proximate the position of the mobile device.

The second advertisement message may have an associated advertising area defining a portion of a geographic region, wherein the mobile device is located within the associated advertising area.

The size of the advertising area may depend on a mode of transport of the mobile device.

The first advertisement message may have an associated advertising area defining a portion of a geographic region, wherein the location of the upcoming transit stop is located within the associated advertising area.

The advertising program may obtain a past position and a current position of the mobile device and determines a direction of travel of the mobile device.

According to an aspect of the invention, there is provided a computer implemented method of providing advertisements, the method comprising: identifying a public transit line that a mobile device is traveling on; and providing an advertisement message for a point of interest to the mobile device, wherein the point of interest is located proximate an upcoming transit stop of the transit line that the mobile device is traveling on.

The public transit line that a mobile device is traveling on may be determined by map matching a position of the mobile device to data representing a location of the public transit line.

The public transit line that a mobile device is traveling on may be determined by evaluating the speed of travel of the mobile device.

The public transit line that a mobile device is traveling on may be determined by evaluating schedule data of the public transit line.

### BRIEF DESCRIPTION OF THE DRAWINGS

An exemplary embodiment of the present invention is described herein with reference to the following drawings.
Figure 1 illustrates an embodiment of a system for providing advertising messages in a geographic region.
Figure 2 illustrates a more detailed view of an advertising provider of the system for providing advertising messages in a geographic region.
Figure 3 illustrates a more detailed view of a mobile device of the system for providing advertising messages in a geographic region.
Figure 4 is a block diagram of a geographic database.
Figure 5 is a block diagram of a road network data record of the geographic database.
Figure 6 is a block diagram of a transit network data record of the geographic database.
Figure 7 is a block diagram of an advertisement database.
Figure 8 is a flow chart for providing advertising messages.
Figure 9 illustrates a map of a geographic region that depicts the location of two mobile devices according to an example embodiment.

### DETAILED DESCRIPTION OF THE

### PRESENTLY PREFERRED EMBODIMENTS

### I. Advertising System Overview

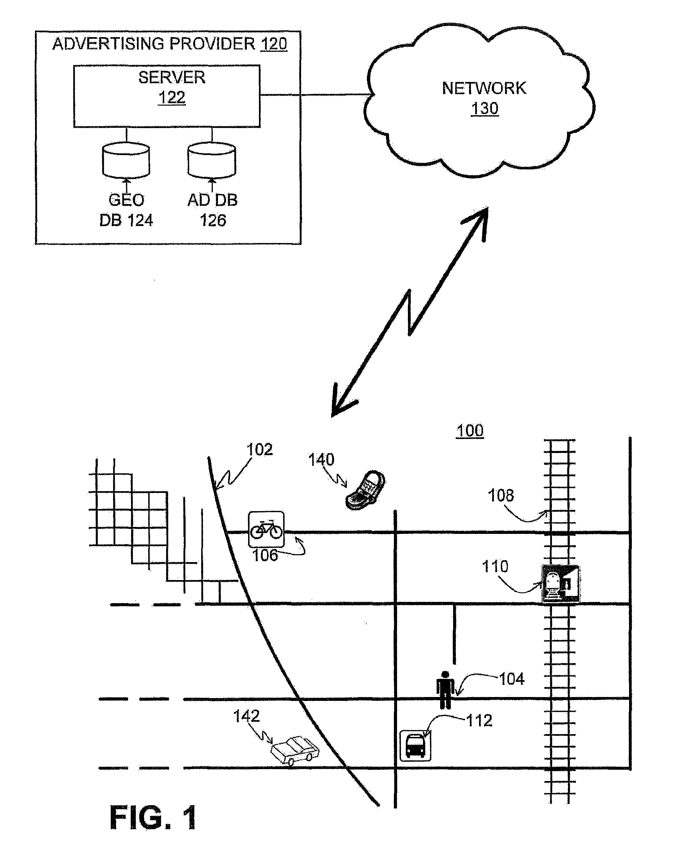

Figure 1 is diagram illustrating a geographic region 100. The region 100 may be a metropolitan area, such as the New York metropolitan area, the Los Angeles metropolitan area, or any other metropolitan area. Alternatively, the region 100 may be a state, province, or country, such as Illinois, France, or Germany. Alternatively, the geographic region 100 can be a combination of one or more metropolitan areas, states, countries, and so on. Located in the region 100 are a road network for travel by vehicles, a pedestrian network for travel by pedestrians, a bicycle network for travel by bicycles and a transit network.

The road network provides a series of connected road segments 102 and intersections; the pedestrian network comprises sidewalks and pedestrian paths 104; the bicycle network includes bike paths 106, bike lanes on road segments and road segments appropriate for travel by bicycles. Furthermore, the region 100 includes a public transit network that may encompass any shared passenger transportation modes available for use by the general public, including but not limited to railroads (long distance train lines), public bus lines (city public transit bus lines), tourist bus lines (bus systems that serve tourist areas and provide transport between tourist attractions), metro railway lines (rapid transit lines such as subways and elevated lines that provide rail-based public transit within a city or metro area), light rail (light rail vehicles with tracks running along a street, such as trams, trolleys, or street cars), water taxi (a boat providing transit service within an urban area), monorail (rail transit system operating on a single beam that may be elevated). The geographic region 100 is shown as including a railway 108 and a plurality of railway stops 110 associated with one or more railway lines. (As used herein, the terms "stop" and "station" may be used interchangeably). As another example, the geographic region 100 is shown as including a plurality of bus stops 112 associated with one or more bus lines. (It should be understood that road segments and nodes may also be associated with the one or more bus lines). Other examples are possible as well.

Figure 1 illustrates an embodiment of a system for providing advertising messages. The system includes an advertising provider 120, a network 130, and a mobile device 140. The mobile device 140 may be a cellular telephone, a mobile phone, a smart phone, a personal digital assistant ("PDA"), a tablet computer, a laptop, a personal navigation device ("PND"), a portable navigation device, a navigation system built into a vehicle and/or any other electronic device. The mobile device 140 may be associated with vehicles 142 that travel on the road network 102 in the region 100. The vehicles 142 may include a variety of cars, trucks, and motorcycles. The mobile device 140 may also be carried by a pedestrian or person traveling on transit, bicycle or other mode of transportation.

The mobile device 140 includes suitable equipment that enables them to receive the advertising messages sent by the advertising provider 120. The advertising provider 120 transmits data indicating advertisements for points of interests, such as businesses and facilities including retail stores, restaurants, entertainment facilities, and so on, located in the region 100 or for services that are available in the region 100, sometimes referred to as advertising messages or advertisement messages. The mobile devices 140 that receive the advertising messages may include various different computing platforms.

The advertising provider 120 includes at least a server 122, a geographic database 124 and an advertisement database 126. The network 130 and the communication paths between the advertising provider 120 and the network 130 may be any protocol or physical connection that is used to couple a server to a computer. The communication paths may utilize cellular, Ethernet, wireless, transmission control protocol (TCP), internet protocol (IP), or multiprotocol label switching (MPLS) technologies. In addition, the communication paths between the mobile device 140 and the network 130 may utilize cellular technologies including 3G, 4G, or WiMAX. As used herein, the phrases "in communication" and "couple" are defined to mean directly connected to or indirectly connected through one or more intermediate components. Such intermediate components may include both hardware and software based components.

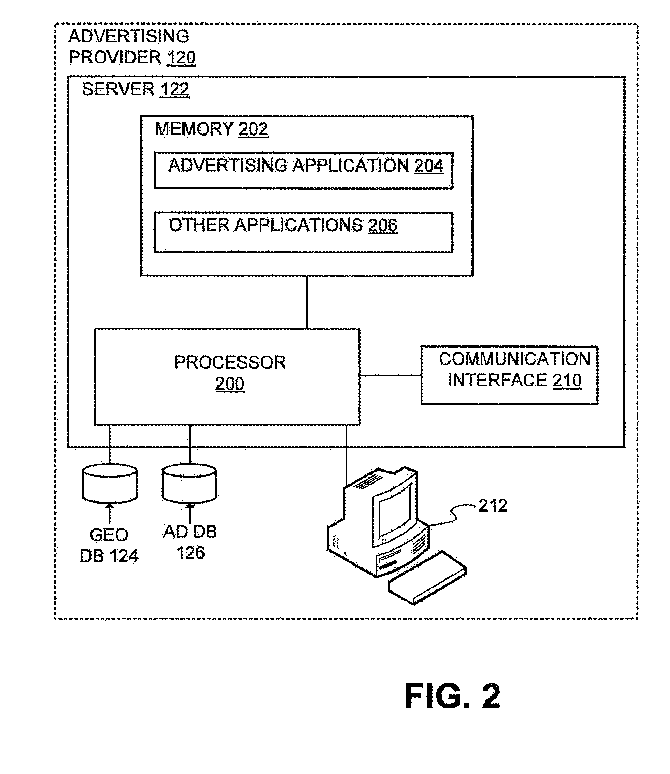

Figure 2 illustrates a more detailed view of the advertising provider 120 of the system for providing advertising messages. The advertising provider 120 creates, formats and distributes the advertising messages to a plurality of mobile devices 140. The advertising provider 120 includes equipment and programming for creating, formatting and transmitting the advertising messages. Included among the equipment and programming of the advertising system is an advertising server 122. The advertising server 122 includes appropriate computer hardware and software to run network applications. The advertising server 122 is maintained and operated by the advertising provider 120. The advertising server 122 includes a processor 200, memory 202 and a communication interface 210. Additional, different, or fewer components may be used for the advertising server 122.

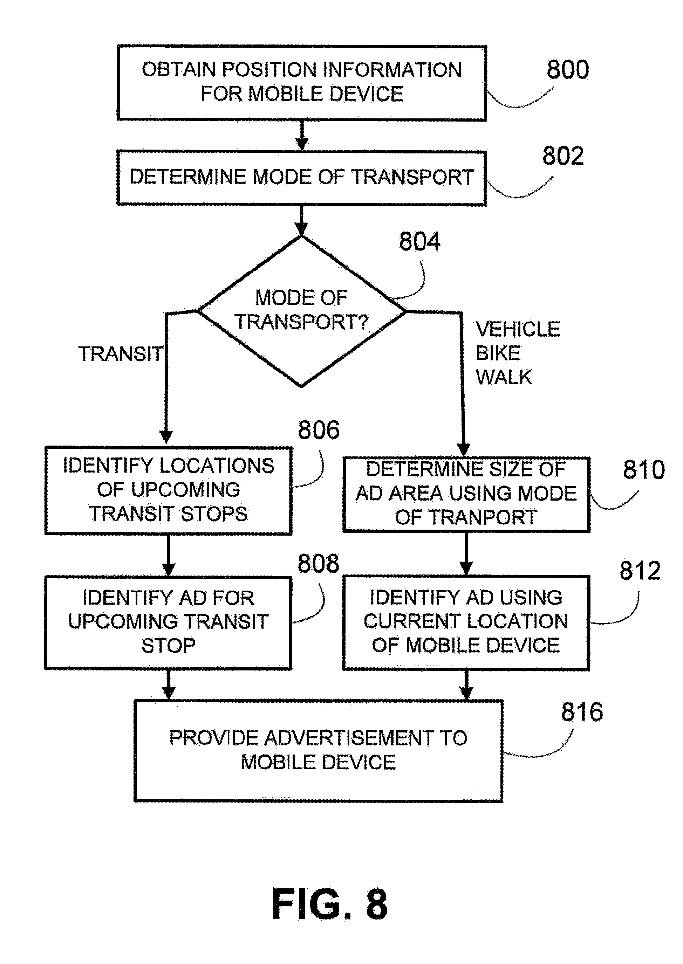

Referring to Figure 2, server applications are included on the advertising server 122. The server applications may be stored on memory comprising one or more hard drive(s) or other computer readable media operated by the server 122 and loaded into a memory 202 of the server 122 to be executed by the processor 200. One of the server applications is an advertising application 204. The advertising application 204 creates, formats and transmits the advertising message to the mobile device 140. The operation of the advertising application will be discussed in detail in conjunction with Figure 8 below.

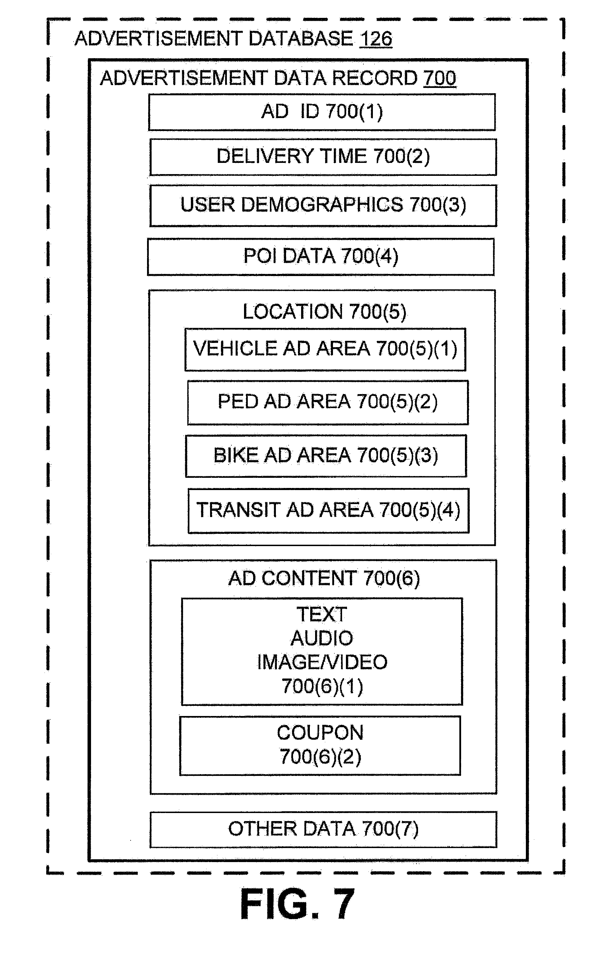

Also associated with the advertising server 122 are the geographic database 124 stored on a computer readable medium and the advertisement database 126 stored on a computer readable medium. The geographic database 124 includes geographic data representing a geographic region. The geographic data may include data representing the road network, pedestrian network, public transit network, bicycle network and points of interest located in the geographic region 100. The advertisement database 126 includes data representing advertisements and data representing advertising campaigns. The advertisement database 126 is described in detail below in conjunction with Figure 7.

Referring to Figure 2, other server applications 206 may be provided. One example of another server application 206 is a navigation-related server application that may include separate applications (or subprograms) that provide these various navigation features and functions. These functions and features may include route calculation (wherein a route to a destination identified by the end-user is determined), route guidance (wherein detailed directions are provided for reaching a desired destination) and other navigation-related or map-related functions and programming, such as map display, positioning (i.e., map matching), local search, destination selection and so on. The advertising application 204 and the other applications 206 may be written in a suitable computer programming language such as C, although other programming languages, such as C++ or Java, are also suitable.

Referring to Figure 2, the advertising provider 120 also includes a workstation 212. A representative of the advertising provider 120 may use the workstation 212 to establish advertising campaigns and advertising content for the advertisements database 126. Additionally, the representative may be external to the advertising provider 120 and provide advertising campaigns and advertising content.

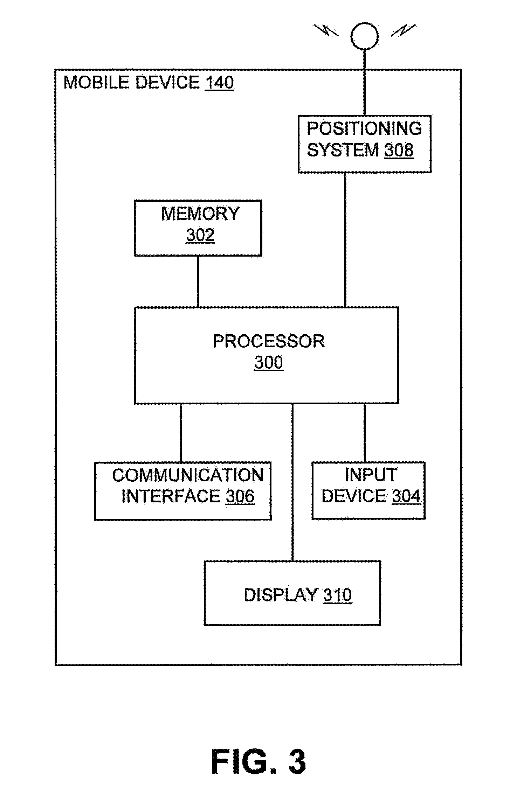

Figure 3 illustrates a more detailed view of the mobile device 140 of the system for providing advertising messages. The mobile device 140 includes a processor 300, a memory 302, an input device 304, a communication interface 306, a positioning system 308, and a display 310. The processor 300 may be any type of processor suitable for mobile devices and/or computers.

The memory 302 may be a volatile memory or a non-volatile memory. The memory 302 may include one or more of a read only memory (ROM), random access memory (RAM), a flash memory, an electronic erasable program read only memory (EEPROM), or other type of memory. The memory 302 may include an optical, magnetic (hard drive) or any other form of data storage device. The memory 302 may be removable from the mobile device 140, such as a secure digital (SD) memory card.

The input device 304 may be one or more buttons, keypad, keyboard, mouse, stylist pen, trackball, rocker switch, touch pad, voice recognition circuit, or other device or component for inputting data to the mobile device 140. The input device 304 and the display 310 may be combined as a touch screen, which may be capacitive or resistive. The display 310 may be a liquid crystal display (LCD) panel, light emitting diode (LED) screen, thin film transistor screen, or another type of display.

The communication interface 306 may include any operable connection. An operable connection may be one in which signals, physical communications, and/or logical communications may be sent and/or received. An operable connection may include a physical interface, an electrical interface, and/or a data interface. An operable connection may include differing combinations of interfaces and/or connections sufficient to allow operable control. For example, two entities can be operably connected to communicate signals to each other directly or through one or more intermediate entities (e.g., processor, operating system, logic, software). Logical and/or physical communication channels may be used to create an operable connection. For example, the communication interface 306 may include an output communication interface devoted to sending signals, data, packets, or datagrams and an input communication interface devoted to receiving signals, data, packets, or datagrams. The communication interface 306 provides for wireless and/or wired communications in any now known or later developed format.

The positioning system 308 includes a global positioning system (GPS), cellular, or similar position sensor for providing location data. The positioning system 308 may utilize GPS-type technology, a dead reckoning-type system, or combinations of these or other systems. The positioning system 308 may include suitable sensing devices that measure the traveling distance, speed, direction, and so on, of the device 140. The positioning system 308 may also include appropriate technology to obtain a GPS signal.

In another embodiment, the mobile device 140 may include a geographic database and navigation-related and map-related application software program(s) that provide these various navigation and map features and functions, such as route calculation, route guidance, map display, positioning, local search, destination selection and so on.

### II. Geographic Database and Advertisement Database

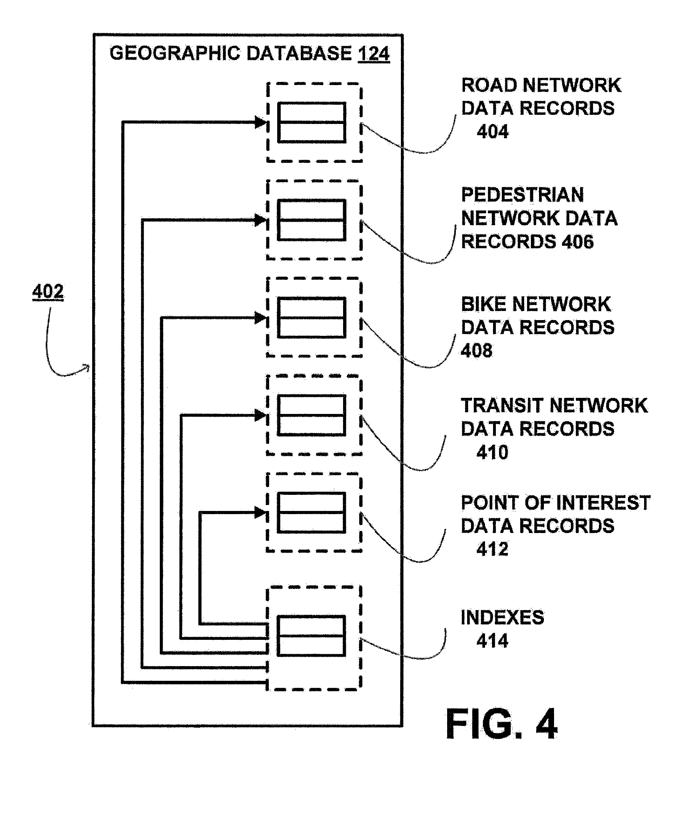

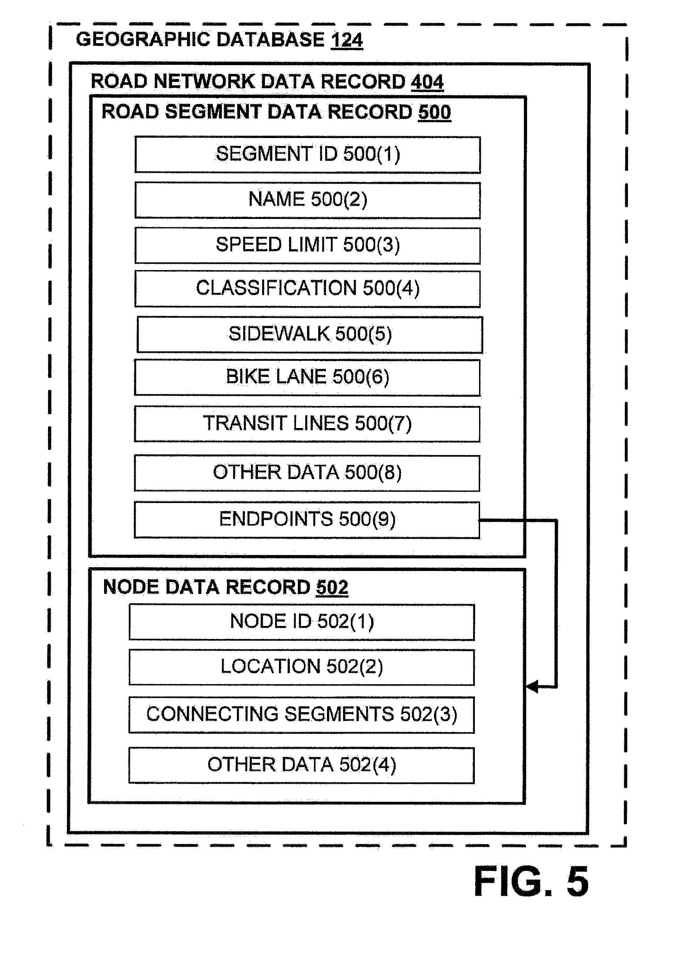

The geographic database 124 includes geographic data representing features located in a geographic region. Referring to Figure 4, the geographic database 124 contains data 402 that represents some of the features in the geographic region 100 depicted in Figure 1. In one embodiment, the data 402 contained in the geographic database 124 includes road network data records 404 that represents features associated with the road network 102 in the geographic region 100. Figure 5 shows components of the road network data records 404 that may contain at least one road segment data record 500 (or "entity" or "entry") for each road segment in the geographic region 100 and a node data record 502 (or "entity" or "entry") for each node in the geographic region 100. The node may correspond to an intersection of two or more road segments or an end of a road segment. Other examples are possible as well. It should be understood that the terms "segments" and "nodes" represent only one terminology for describing these physical geographic features, and other terminology for describing these features is intended to be encompassed within the scope of these concepts.

Figure 5 shows components of a road segment data record 500 contained in the geographic database 124, according to an example embodiment. As shown, in one aspect, the road segment data record 500 may include or be associated with a segment ID 500 (1) by which the data record can be identified in the geographic database 124. In another aspect, the road segment data record 500 may include or be associated with data that indicates attributes of the represented road segment. For example, the road segment data record 500 may include or be associated with data 500(2) that indicates the name of the road to which the road segment belongs.

The road segment data record 500 may include or be associated with data 500(3) that indicates a speed limit on the represented road segment. In yet another example, the road segment data record 500 may include or be associated with data 500(4) indicating a classification of the road to which the represented road segment belongs (e.g., controlled access road, highway, local road, ramp, bridge, tunnel, toll road, etc.). In still another example, the road segment data record 500 may include or be associated with data 500(5) indicating a sidewalk associated with the represented road segment. In a further example, the road segment data record 500 may include or be associated with data 500(6) indicating the presence of a bike lane associated with the road segment. In a further example, the road segment data record 500 may include or be associated with data 500(7) about any public transit lines (e.g., bus lines) associated with the road segment, such as an identifier, name, and/or type of the transit line(s). The road segment data record 500 may also include or be associated with other data 500(8) that indicates other attributes of the represented road segment (e.g., restrictions on the direction of vehicular travel, street address ranges, length and shape of the road segment and so on.). For example, the other data 500(8) may provide location information (e.g., latitude and longitude) of points located on the road segment.

In yet another aspect, the road segment data record 500 may include or be associated with data 500(9) identifying endpoint nodes of the represented road segment. For example, the data 500(9) may include an identifier and/or a geographic location (e.g., latitude and longitude) of each endpoint node. As another example, the data 500(9) may include a link to a node data record 502 for each endpoint node. As yet another example, the data 500(9) may identify one endpoint as a starting node. Other examples are possible as well.

Figure 5 further shows components of a node data record 502 contained in the geographic database 124, according to an example embodiment. As shown, in one aspect, the node data record 502 may include or be associated with a node ID 502(1) by which the node can be identified in the geographic database 124. In another aspect, the node data record 502 may include or be associated with data indicating various attributes of the represented node. For example, the node data record 502 may include or be associated with data 502(2) indicating a geographic location (e.g., latitude and longitude) of the represented node. In another example, the node data record 502 may include or be associated with data 502(3) identifying each road segment connected to the represented node. The node data record 502 may also include or be associated with other data 502(4) that indicates other attributes of the represented node. For example, the other data 502(4) may indicate the presence of a crosswalk.

Referring back to Figure 4, the data 402 contained in the geographic database 124 includes pedestrian network data records 406 that represent features associated with the pedestrian network 104 in the geographic region 100. For example, the geographic database 124 that represents the geographic region 100 may contain at least one pedestrian segment data record (or "entity" or "entry") for each pedestrian segment or pedestrian path in the geographic region 100. The data 406 that represents the pedestrian segments may include the sidewalk data 500(5) of the road segment data records 500 and data representing crosswalks. Additionally, the data 406 may represent pedestrian segments that are not associated with any road segment, such as pedestrian only paths and off-road pedestrian paths. The data 406 indicates the locations of the pedestrian segments, such as the locations of end points of the pedestrian segment, and may provide location information (e.g., latitude and longitude) of points located on the pedestrian segment.

Referring to Figure 3, the data 402 contained in the geographic database 124 includes bike network data records 408 that represent features associated with the bicycle network 106 in the geographic region 100. For example, the geographic database 124 that represents the geographic region 100 may contain at least one bicycle segment data record (or "entity" or "entry") for each bicycle segment or bike path in the geographic region 100. The data 408 that represents the bicycle segments may include the bike lane data 500(6) of the road segment data records 500. Additionally, the data 408 may reference road segment data records 500 that have classification data 500(4) of residential streets or other road segments that are appropriate for travel by bicycle. Additionally, the data 408 may represent bike paths that are not associated with any road segment, such as off-road bike paths. The data 408 indicates the locations of the bicycle segments, such as the locations of end points of the segment, and may provide location information (e.g., latitude and longitude) of points located on the bike path.

Referring to Figure 4, the data 402 contained in the geographic database 124 may include transit network data records 410 that represent a public transit network in the geographic region 100. For example, the geographic database 124 that represents the geographic region 100 may contain at least one transit line data record (or "entity" or "entry") for each transit line in the geographic region 100 (e.g., a railway line running on the railway 108). As another example, the geographic database 124 that represents the geographic region 100 may include a stop data record (or "entity" or "entry") for each transit stop in the geographic region 100 (e.g., railway stops 110, bus stops 112, etc.). As above, it should be understood that the terms "lines" and "stops" represent only one terminology for describing these physical geographic features, and other terminology for describing these features is intended to be encompassed within the scope of these concepts.

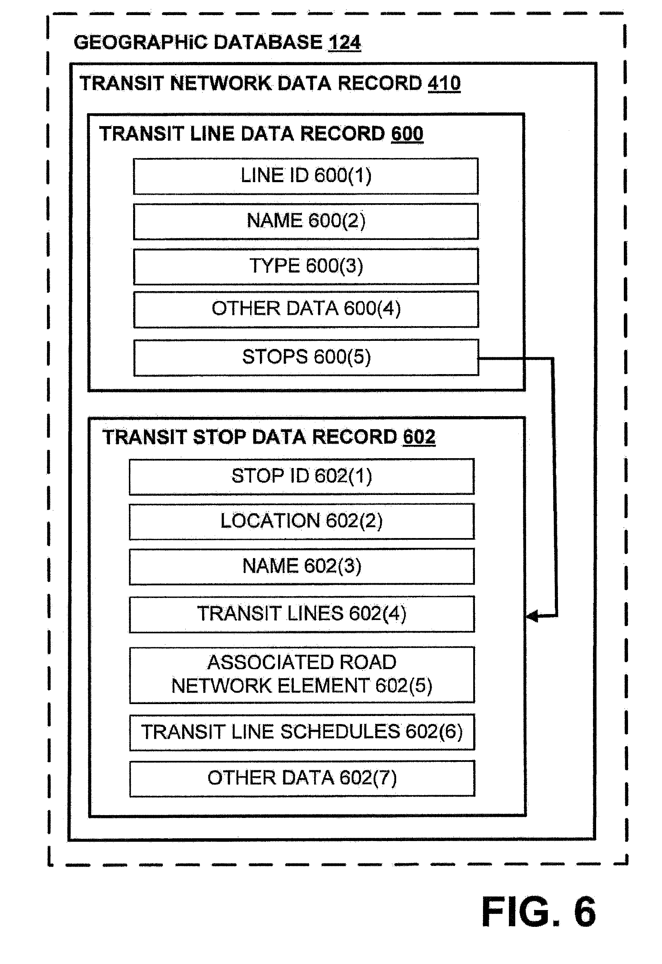

Figure 6 shows components of a transit line data record 600 contained in the geographic database 124, according to an example embodiment. As shown, in one aspect, the transit line data record 600 may include or be associated with a line ID 600(1) by which the transit line can be identified in the geographic database 124.

In another aspect, the transit line data record 600 may include or be associated with data indicating various attributes of the represented transit line. For example, the transit line data record 600 may include or be associated with data 600(2) indicating a name of the represented transit line. As another example, the transit line data record 600 may include or be associated with data 600(3) indicating a type of the represented transit line (e.g., bus line, rapid transit line, commuter rail line, etc.). The transit line data record 600 may also include or be associated with other data 600(4) indicating other attributes of the represented transit line (e.g., cost, average speed of travel of the train, bus, boat, and top speed of travel of train, bus, boat). The other data 600(4) may indicate the locations of the transit line, such as along a referenced road segment, and may provide location information (e.g., latitude and longitude) of points located along the transit line.

In yet another aspect, the transit line data record 600 may include or be associated with data 600(5) identifying stops associated with the represented transit line. For example, the data 600(5) may include an identifier and/or a geographic location (e.g., latitude and longitude) of each stop associated with the represented transit line. As another example, the data 600(5) may include a reference to a stop data record 602 for each stop associated with the represented transit line. Other examples are possible as well. (Although not shown, the transit line data record may similarly include or be associated with data identifying railways and/or road network elements associated with the represented transit line).

Figure 6 further shows components of a stop data record 602 contained in the geographic database 124, according to an example embodiment. As shown, in one aspect, the stop data record 602 may include or be associated with a stop ID 602(1) by which the represented stop can be identified in the geographic database 124. In another aspect, the stop data record 602 may include or be associated with data indicating various attributes of the represented stop. For example, the stop data record 602 may include or be associated with data 602(2) indicating a geographic location (e.g., latitude and longitude) of the represented stop. In another example, the stop data record 602 may include or be associated with data 602(3) indicating a name of the represented stop. In yet another example, the stop data record 602 may include or be associated with data 602(4) identifying public transit line(s) associated with the represented stop.

In a further example, the stop data record 602 may include or be associated with data 602(5) indicating an association between the represented stop and a road network or pedestrian network or bike network element. For example, the data 602(5) may provide a road segment ID or node ID corresponding to the location of the stop. The data 602(5) indicating an association between the stop and the road network or pedestrian network provides a connection between the transit line and the road/pedestrian network, such as from the bus stop to a sidewalk associated with a road segment that the bus stop is located on. The data 602(5) may also indicate an access level of the represented stop with respect to the associated road network element (e.g., above, below, or at street level). In yet a further example, the stop data record 602 may include or be associated with data 602(6) indicating transit line schedule(s) for the represented stop (e.g., departure and arrival times for associated transit line runs). The stop data record 602 may also include or be associated with other data 602(7) indicating other attributes of the represented stop.

Referring back to Figure 4, the geographic database 124 may include data that represents points of interest in the geographic region 100, such as restaurants, stores and other businesses. For example, the geographic database 124 that represents the geographic region 100 may contain one or more point of interest data records 412 that each includes, among other things, an identifier of a represented point of interest and data indicating attributes of the represented point of interest (e.g., location, type, phone number, hours of operation, etc.). Other examples are possible as well.

The geographic database 124 may additionally include indexes 414. The indexes 414 may include various types of indexes that associate different types of data contained in the geographic database 124 to each other or that associate to other aspects of the data contained in the geographic database 124. For example, the indexes 414 may associate road segment data records 500 with road node data records 502. As another example, the indexes 414 may associate transit line data records 600 with stop data records 602. As yet another example, the indexes 414 may associate transit line data records 600 and/or stop data records 602 with road data records 500 and/or node data records 502. As still another example, the indexes 414 may associate point of interest data records 412 with road segment data records 500, node data records 502, transit line data records 600 and/or stop data records 602. Other examples are possible as well.

In order to provide advertising messages, the advertising provider 120 uses the advertisement database 126 that includes data representing advertisements and data representing advertising campaigns. Referring to Figure 7, the advertisement database 126 contains advertisement data records 700 that represent content and campaign information for the advertisements or advertising messages. The advertisement data 700 includes an advertisement ID 700(1) by which the advertisement data can be identified in the advertisement database 126. Each advertisement data record 700 has associated with it information regarding the advertising campaign and the content for the advertisement message.

Referring to Figure 7, the advertisement data 700 includes data that indicate conditions on the delivery of the advertisement and that provide guidelines and information for the advertising campaign. In one embodiment, the advertisement data 700 provides how the advertisement will be targeted to mobile devices 140. In one embodiment, the advertisement data 700 include data representing delivery time 700(2) or when the advertisement should be delivered, such as time of the day for delivery, between certain hours of the day, on certain days of the week, and so on.

The advertisement data 700 also includes data representing user demographics data 700(3) for targeted recipients for the advertisement. The user demographic data 700(3) indicates what characteristics, such as age, sex, education level, family type, income level and so on, the intended targeted users possess. For example, the demographic data may indicate that the advertisement should be delivered to females between the ages of 30 to 40 years old. Additionally, the demographics data 700(3) may include defined user preferences, defined interests and behavioral patterns.

The advertisement data 700 includes POI data 700(4) that identifies the point of interest associated with the advertisement, such as an ID of a point of interest that identifies the point of interest represented in the geographic database 124. The point of interest associated with the advertisement is typically a business, such as a retail establishment, restaurant, service establishment and so on. The POI data 700(4) provides the location of the point of interest associated with the advertisement, such as an address, latitude and longitude position, or other location reference system. The POI data 700(4) may also provide further information regarding the point of interest, such as business hours, point of interest category, telephone number, website, and other details regarding the point of interest.

The advertisement data 700 includes location data 700(5) representing locations for delivery of the advertisement or where the mobile device is located to be targeted with the advertisement, such as to any mobile device 140 in the geographic region, to mobile devices located in a defined portion of the geographic region, such as within a region defined by a polygon or a circle centered on a defined point location, and so on. In one embodiment, the advertisement is targeted based on the mobile devices' real time or current locations. In another embodiment, the advertisement is targeted based on the mobile devices' expected future locations or past locations.

The location data 700(5) may specify a geo-fenced area or a defined area called an advertisement area, and the advertisement is to be sent to mobile devices 140 located within the geo-fenced area or advertisement area and not to the mobile devices located outside of the geo-fenced area or advertisement area. For example, the advertising area is a circular region centered at the location of the point of interest with a specified radius size. In one embodiment, the location data 700(5) provides vehicle advertisement area data 700(5)(1) that defines a portion of the geographic region as the area for location targeting the advertisement to the mobile device 140 that is traveling in a vehicle. The location data 700(5) may also provide pedestrian advertisement area data 700(5)(2) that defines a portion of the geographic region as the area for location targeting the advertisement to the mobile device 140 that is being carried by a pedestrian. In one embodiment, the location data 700(5) provides bike advertisement area data 700(5)(3) that defines a portion of the geographic region as the area for location targeting the advertisement to the mobile device 140 that is traveling on a bicycle. The location data 700(5) may further provide transit advertisement area data 700(5)(4) that defines a portion of the geographic region as the area for location targeting the advertisement to the mobile device 140 that is traveling on public transit.

In one embodiment, the vehicle advertisement area is larger than the pedestrian advertisement area and bike advertisement area because users traveling in vehicles may travel greater distances in less time as compared to users traveling on foot or bike. Similarly, the bike advertisement area may be larger than the pedestrian advertisement area because users traveling by bicycle may travel greater distances in less time as compared to users traveling on foot.

Referring to Figure 7, the advertisement data 700 also includes data representing content 700(6) for the advertising message, such as text, audio, images and video. In one embodiment, the advertisement database 126 includes more than a single advertisement content for each advertisement message. In another embodiment, the advertisement database 126 includes more than one version of advertisement content for the advertising message for a single point of interest or service. Referring to Figure 7, the content 700(6)(1) comprises text, audio, images and/or video and the content also includes a coupon 700(6)(2) or other incentive to encourage the advertising recipient(s) to visit the associated point of interest or request the associated service.

The advertisement data 700 includes other data 700(7). Other data 700(7) may indicate key words that would trigger the advertising message, such as a user requesting a restaurant. Additionally, the other data 700(7) may include pricing information for the advertisement.

### III. Location-Based Advertising Considering Mode of Transport

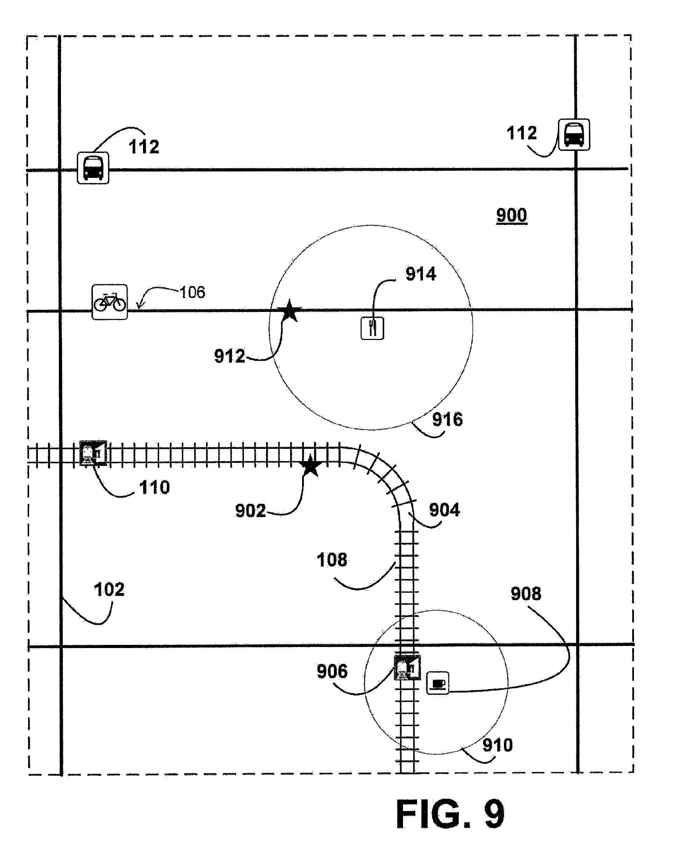

As discussed above in conjunction with Figure 2, the advertising provider 110 includes the advertising program 204 that provides advertising messages to various mobile devices 140. In one embodiment, the advertising program 204 provides location based advertisements to mobile devices 140 by considering the likely mode of transport, such as by vehicle, bicycle, public transit or by foot (pedestrian), of the mobile device 140. Figure 8 illustrates a flow chart of the steps for providing a location based advertisement considering likely mode of transport according to an example embodiment. Figure 9 illustrates a map of a geographic region 900 that will be used to illustrate the steps discussed in conjunction with Figure 8.

A location based advertising system provides advertisements to the mobile device based on a current location of a device. Typically, the system selects the advertisement based on whether the current location is within a geo-fence of a point of interest associated with the advertisement. One shortcoming of providing location based advertisements based solely on the device's location is that the recipient may be unable or unwilling to act on the advertisement due to his or her current mode of transport. One clear example of this shortcoming is a person riding on a commuter train. Suppose the current location of the device triggers a location based advertisement for a coffee shop that is located two blocks away from the current location of the device. However, the user of the device cannot leave the moving train at its current location that is several miles away from the next train stop. Moreover, the next train stop is too far away from the coffee shop to allow the user to act on the advertisement. Accordingly, if this location based advertisement is provided to the mobile device, it is wasted providing no benefit to the advertiser or to the user of the mobile device.

In one embodiment, the advertising program 204 determines the mode of transport of the mobile device 140 and uses the mode of transport as well as the current position of the mobile device when identifying an advertisement to provide to the mobile device 140. Referring to Figures 8 and 9, at step 800, the advertising program 204 obtains position information of a mobile device 902. In one embodiment, the server periodically obtains the current position of the mobile device 902, such as every second. The positioning system 308 determines the location, direction, orientation and/or speed of the mobile device 902. The current position may be provided to the server 112 in terms of latitude and longitude coordinates. In one embodiment, the mobile device 902 runs an application that requests an advertisement from the server 112 and includes an identification of the mobile device 902 as well as the position information and/or demographics, interest and preference information with the request to the server 112. In one embodiment, the server 112 obtains position information that may be used to determine location and speed of travel. For example, the server obtains the current position and several past positions of the mobile device along with a time stamp of when the mobile device was located the past positions.

In another embodiment, the position information of the mobile device 902 is a likely future position. For example, the advertising program 204 obtains position information indicating travel plans, and the destination as well as mode of transport of the travel plans is used as the position of the mobile device 902. In a further embodiment, the position may be determined by analyzing historic position data. The position data for the mobile device from many weeks may be analyzed to determine a pattern of travel and locations regularly visited. For example, by analyzing past position data, the advertising program may determine that the mobile device travel along the same transit line every morning from 8:15 am to 8:35 am. In another embodiment, the position information provided to the server 122 includes the mobile device checking in to a transit vehicle, such as through payment or ticket purchase.

At step 802, the advertising program 204 determines the mode of transport for the mobile device 902. In one embodiment, the advertising program 204 identifies the road segment, pedestrian segment, bike segment or transit line that the mobile device 902 is currently traveling on by map matching. The advertising program 204 analyzes the position information received in step 800. In one embodiment, the current position and past positions of the mobile device are compared to data from the geographic database 124 that represent the location of road segments, pedestrian segments, bike segments and transit lines. The data from the geographic database includes road segment data 500, pedestrian network data 406, bike network data 408 and transit line data 600. Additionally, the past position and current position information may be used to determine a direction of travel.

For the example depicted in Figure 9, the current position of the mobile device 902 is matched to be located along the transit line 904. In this example, past positions along with the current position are map matched to be located along the transit line 904 using the data indicating the location of the transit line. By evaluating past and current positions, the advertising program 204 may identify the direction of travel of the mobile device along the transit line, such as in the direction toward stop 906.

In another example, the position information may be map-matched to indicate that consecutive positions are located along a road segment represented by the road segment data 500, along a pedestrian segment or sidewalk represented by the pedestrian network data 406, along a bike path represented by the bicycle network 408 or off of the road network, pedestrian network, bicycle network and transit network. For the mobile device located off of any of the networks, it is assumed that the mobile device is traveling in pedestrian mode of transport. Because some road segments, sidewalks, bike lanes and bus lines all share similar locations, additional information including speed of travel, stopping behavior, transit schedules and real time information are evaluated to determine the likely mode of transport.

In one embodiment, the advertising program 204 obtains classification data 500(4) of a road segment that the mobile device has been matched to be traveling along. The classification data 500(4) assists with eliminating possible modes of transport. For example, if the classification data 500(4) indicates that vehicles are only permitted to travel on the road segment, such as highways and toll roads, the modes of transport of bike and pedestrian are eliminated.

In one embodiment, the advertising program 204 uses speed information to help determine the mode of transport of the mobile device. In one embodiment, the positioning system 308 of the mobile device determines the speed of travel of the mobile device, and the mobile device provides the speed information to the server 122. In another embodiment, the advertising program 204 calculates the speed of travel between the last prior position and the current position as distance traveled divided by time elapsed. The speed of travel information is used to distinguish between vehicle, bicycle and pedestrian modes of transport. For example, the advertising program 204 has map-matched the current and past position information to a road segment that includes a sidewalk and bike lane. The advertising program 204 obtains the speed limit data 500(3) for the road segment and compares the speed limit to the speed of travel of the mobile device. If the speed of travel of the mobile device is approximately equal to the speed limit, the advertising program determines that the mode of transport is by vehicle. If the speed of transport of the mobile device is within the range of typical bicycle speed (10 - 15 miles per hour), the advertising program determines that the mode of transport is by bicycle. If the speed of travel is within the range of typical pedestrian speed (3 miles per hour), the advertising program determines that the mode of transport is by bicycle.

Additionally, the advertising program 204 may obtain transit line schedules data to help identify whether the current or past positions correspond to expected positions of the transit vehicle. Moreover, the server 122 may obtain real-time information on the position of transit vehicles that may also be compared to the current and past positions of the mobile device to determine the mode of transport. Furthermore, the past position information may be evaluated to determine whether the mobile device stops at the location of the transit stops.

At 804, if the mode of transport of the mobile device is transit, the advertising program 204 goes to step 806. If the mode of transport of the mobile device is vehicle, bike or pedestrian, the advertising program goes to step 810. If the mode of transport of the mobile device cannot be determined, the advertising program goes to step 810.

At step 806, the advertising program 204 identifies the location of upcoming transit stops. In one embodiment, using the determined position and direction of travel of the mobile device 902 on the transit line 904, the advertising program obtains location data 602(2) from the transit stop data records 602 representing the upcoming transit stops on the transit line 904 that the mobile device is traveling on. For the example illustrated in Figure 9, the advertising program identifies transit stop 906 as an upcoming transit stop for the mobile device 902 and obtains the location data 502(2) for transit stop 906.

At step 808, the advertisement program 204 identifies an advertisement for the location of the upcoming transit stop. The advertising program 204 accesses the advertisement database 126 to identify one of the advertisement data records 700 whose location data 700(5) matches the location of one of the upcoming transit stops. For example, the transit advertising area data 700(5)(4) may specify a geo-fence or geographic region around the location of a point of interest, and the location of one of the upcoming transit stops is located with this geo-fence. In other embodiments, the advertisement selected may be based upon demographics of the user of the mobile device, preferences and behavior patterns of the user of the mobile device. In another embodiment, the advertisement selected considering delivery time data 700(2). Referring to the example shown in Figure 9, the coffee shop 908 has an advertising area 910, and the upcoming transit stop 906 is located within the advertising area 910. Accordingly, the advertising program identifies an advertisement for the coffee shop 908. After step 808, the advertising program performs step 814 that will be described below.

For the device that has been identified as traveling by vehicle, bike, foot or undetermined, at step 810, the advertising system 204 determines the size of the advertising area or geo-fence associated with the advertisement based on the determined mode of transport of the mobile device. The users of the mobile devices with different modes of transport may be willing to travel different distances to the point of interest associated with the advertisement. For example, the user traveling by his or her vehicle may be willing to travel a greater distance to the point of interest associated with the advertisement than the user traveling by bike. Similarly, the user traveling by bike may be willing to travel a greater distance to the point of interest associated with the advertisement than the user walking. Referring to Figure 9, another example is provided with a mobile device 912 traveling along a bike path 106, and the advertising program has determined that the mode of transport of mobile device 912 is by bicycle.

In one embodiment, the advertising program 204 obtains data from the advertisement database indicating the size of the advertising area for the determine mode of transport. If the mode of transport is vehicle, the advertising program obtains the vehicle advertising area data 700(5)(1) to determine the appropriate size of the advertising area for the mobile device traveling on a vehicle. If the mode of transport is walking, the advertising program obtains the pedestrian advertising area data 700(5)(2) to determine the appropriate size of the advertising area for the mobile device traveling with a pedestrian. If the mode of transport is bike, the advertising program obtains the bike advertising area data 700(5)(3) to determine the appropriate size of the advertising area for the mobile device traveling on a bike. In one embodiment, the advertising program determines the size of the advertising areas for those advertisements that have advertising areas with locations proximate to the current location of the mobile device, such as those whose associated points of interest are located in the same administrative district or located within a predetermined distance of the current location of the mobile device. For the example of Figure 9, the point of interest of a cafe 914 is located proximate the location of the mobile device 913. The advertizing area 916 for the cafe 914 is determined to have a radius of one mile using the bike advertising area data 700(5)(4) for the advertisement associated with the cafe 914.

At step 812, the advertisement program 204 identifies an advertisement for the current location of the mobile device. The advertising program 204 accesses the advertisement database 116 to identify one of the advertisement data records 502 whose location data 700(5) matches the location of the mobile device. For example, the bike advertising area data 700(5)(3) may specify a geo-fence or geographic region around the location of a point of interest, and the location of the mobile device is located with the geo-fence. In other embodiments, the advertisement selected may be based upon demographics of the user of the mobile device, preferences and behavior patterns of the user of the mobile device. Referring to the example shown in Figure 9, the caf6 914 has an advertising area 916, and the mobile device 912 is located within the advertising area 916. Accordingly, the advertising program identifies an advertisement for the cafe 914.

Referring to Figure 8, at step 816, the advertising program 204 provides the advertisement to the mobile device located in the advertisement area. For the example shown in Figure 9, the advertising program 204 provides the mobile device 902 an advertisement for the coffee shop 908, and the advertising program 204 provides the mobile device 912 an advertisement for the cafe 914.

If the advertising content includes a coupon, the advertisement message provided to the mobile devices includes the coupon. The advertising program 204 creates the advertisement message using the advertising content data 700(6) for the advertisement data record having its respective advertisement area. The advertisement message is transmitted to the mobile device 140 from the server 122 over the network 130. Once the mobile device 902, 912 receives the advertisement message, the advertisement message is provided to the user via the display 310 and/or other user interface of the mobile device. In one embodiment, the advertisement message is stored in memory 302 of the mobile device, and an application running on the mobile device 140 provides the advertisement to the end user of the mobile device.

The end user views and interacts with the advertisement message via the display and user interface of the mobile device. For example, the end user may click to a landing page associated with the advertisement message, click to the coupon provided by the advertisement message, click to obtain a map displaying the point of interest associated with the advertisement message, click to call the point of interest associated with the advertisement message, click for directions to the point of interest associated with the advertisement message and/or click to obtain a website of the point of interest associated with the advertisement message. The messages communicating the users' response to the advertisement are provided to the mobile devices and provided to the user via the display 310 and/or other user interface of the mobile device 140. In one embodiment, the mobile device 140 may request additional information from the server 122, such as directions to the point of interest. Additionally, the server 122 may track the position of the mobile devices to determine that the devices visit the point of interest and or redeem the offer of the advertisement message. Moreover, the advertising program 204 tracks the user response to the advertisements as well as whether the incentive or coupon is redeemed.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A computer implemented method of providing advertisements, the method comprising:
obtaining a position of a mobile device;
determining a mode of transport of the mobile device;
if the mode of transport is public transit, providing a first advertisement message for a first point of interest to the mobile device, wherein the first point of interest is located proximate an upcoming transit stop of a transit line that the mobile device is traveling on; and
if the mode of transport is vehicle, bike or pedestrian, providing a second advertisement message for a second point of interest proximate the position of the mobile device.

2. The method of Claim 1 wherein the mode of transport is determined by map matching the position of the mobile device to data representing a location of a transit line, a road segment, a bike path or a pedestrian path.

3. The method of Claim 1 wherein the mode of transport is determined by evaluating the speed of travel of the mobile device.

4. The method of Claim 1 wherein the second advertisement message has an associated advertising area defining a portion of a geographic region, wherein the position of the mobile device is located within the associated advertising area.

5. The method of Claim 4 wherein the size of the advertising area depends on the mode of transport of the mobile device.

6. The method of Claim 1 wherein the first advertisement message has an associated advertising area defining a portion of a geographic region, wherein the location of the upcoming transit stop is located within the associated advertising area.

7. The method of Claim 1 further comprising:
obtaining a past position and a current position of the mobile device; and
determining a direction of travel of the mobile device.

8. A system for providing an advertisement comprising:
a processor,
an advertisement database stored on a computer readable medium associated with the processor, and
an advertising program executed on the processor, wherein the advertising program determines whether a mobile device is traveling on a public transit line, and if so, provides a first advertisement message for a first point of interest to the mobile device, wherein the first point of interest is located proximate an upcoming transit stop of the public transit line that the mobile device is traveling on.

9. The system of Claim 8 wherein the advertising program determines whether a mobile device is traveling on the public transit line by map matching the position of the mobile device to data representing a location of the public transit line.

10. The system of Claim 8 wherein the advertising program determines whether a mobile device is traveling on the public transit line by evaluating the speed of travel of the mobile device.

11. The system of Claim 8 wherein the advertising program determines whether a mobile device is traveling on the public transit line by evaluating schedule data of the public transit line.

12. The system of Claim 8 wherein if the mobile device is not traveling on the public transit line, the advertising program provides a second advertisement message for a second point of interest proximate the position of the mobile device.

13. The system of Claim 12 wherein the second advertisement message has an associated advertising area defining a portion of a geographic region, wherein the mobile device is located within the associated advertising area.

14. The system of Claim 12 wherein the size of the advertising area depends on a mode of transport of the mobile device.

15. The system of Claim 8 wherein the first advertisement message has an associated advertising area defining a portion of a geographic region, wherein the location of the upcoming transit stop is located within the associated advertising area.

16. The system of Claim 8 wherein the advertising program obtains a past position and a current position of the mobile device and determines a direction of travel of the mobile device.
